# EUROPEAN PATENT APPLICATION

(11) **EP 4 699 933 A1**
(43) Date of publication of application: **25.02.2026**
(21) Application number: 25196763.4
(22) Date of filing: 19.08.2025
(51) Int. Cl.: B64D 9/00

(54) **SWARM-BASED POWER DRIVE SYSTEM WITH SCALABLE LEVELS OF AUTONOMY**

(30) Priority: 19.08.2024 US 202418808642
(71) Applicant: Goodrich Corporation, Charlotte, NC 28217-4578 (US)
(72) Inventor: SETTERSTROM, Kevin, Fargo, ND, 58104 (US)
(74) Representative: Dehns

(57) **Abstract**

A human-machine interface (HMI) controller (300) for a cargo handling system is provided. The HMI controller includes a touch screen display (312), at least one processor (346), and a memory operatively coupled to the at least one processor. The at least one processor is configured to present multiple cargo operating modes to an operator, responsive to receiving a selection of a cargo operating mode, present a set of operations associated with the cargo operating mode, and, responsive to receiving a selection of at least one operation, send at least one command to at least one power drive unit (PDU) (110) of a plurality of power drive units (PDUs). Each PDU includes a drive roller (208), a motor (242) configured to rotate the drive roller, and a PDU controller (240). The PDU controller is configured to directly communicate with at least one other PDU of the plurality of PDUs to drive cargo as per the at least one command.

## Description

### FIELD

The present disclosure generally relates to the field of cargo handling systems and, more particularly, to establishing a swarm-based power drive system with scalable levels of autonomy.

### BACKGROUND

Typical cargo handling systems utilize centralized control panels to manage power drive units (PDUs) within defined zones. In typical cargo handling systems, a master control panel (MCP) processes input from operators and directs the PDUs, leading to linear complexity and the need for specific software solutions for different implementations. In typical advanced cargo handling systems, sensors and new human-machine interfaces (HMIs) are added to support higher autonomy levels. However, these advanced cargo handling systems face issues with linear time complexity and complex decision-making and software requirements. Linear time complexity is related to increased decisions for the MCP as a size of the advanced cargo handling system size grows, causing bottlenecks. Complex decision-making and software requirements are related to a reliance of the MCP requiring sophisticated software for various scenarios, potentially leading to unique software for different systems.

### SUMMARY

A human-machine interface (HMI) controller for a cargo handling system is disclosed. The HMI controller includes a touch screen display, at least one processor, and a memory operatively coupled to the at least one processor. The memory includes instructions stored thereon that, when executed by the at least one processor, cause the at least one processor to present multiple cargo operating modes to an operator via the touch screen display; responsive to receiving a selection of a cargo operating mode from the multiple cargo operating modes, present a set of operations associated with the cargo operating mode to the operator; and, responsive to receiving a selection of at least one operation from the set of operations associated with the cargo operating mode, send at least one command to at least one power drive unit (PDU) of a plurality of power drive units (PDUs). The plurality of PDUs operate in a decentralized control architecture, with each PDU of the plurality of PDUs autonomously making decisions based on a current commanded objective of the at least one command and directly communicating with at least one other PDU of the plurality of PDUs. Each PDU in the plurality of PDUs includes a drive roller, a motor configured to rotate the drive roller, and a PDU controller. The PDU controller is configured to directly communicate with the at least one other PDU of the plurality of PDUs to drive cargo as per the at least one command.

In various embodiments, the multiple cargo operating modes include an autonomous mode, a semi-autonomous mode, a zone mode, and a discrete mode.

In various embodiments, in the autonomous mode, the instructions, when executed by the at least one processor, further cause the at least one processor to load a loading plan for loading a unit load device (ULD) into a cargo compartment; and, responsive to receiving an initiate command from the operator, set high-level objectives for the PDUs to autonomously load the ULD into the cargo compartment according to the loading plan.

In various embodiments, in loading the ULD into the cargo compartment, the instructions, when executed by the at least one processor, further cause the at least one processor to display, via the touch screen display, the ULD to be loaded; display, via the touch screen display, an end location in the cargo compartment for the ULD; and display, via the touch screen display, a path the ULD will move within the cargo compartment.

In various embodiments, in the semi-autonomous mode, the instructions, when executed by the at least one processor, further cause the at least one processor to receive a selection of a unit load device (ULD) to move within a cargo compartment; receive a selection of a destination location for the ULD; and, responsive to receiving an initiate command from the operator, set high-level objectives for the PDUs to autonomously move the ULD to the destination location.

In various embodiments, in the zone mode, the instructions, when executed by the at least one processor, further cause the at least one processor to receive a selection of a unit load device (ULD) to move within a cargo compartment; receive the selection of at least one operation to be performed in moving the ULD within the cargo compartment; and, responsive to receiving a command from the operator via a joystick, set high-level objectives for the PDUs to autonomously move the ULD according to the command received via the joystick.

In various embodiments, in the discrete mode, the instructions, when executed by the at least one processor, further cause the at least one processor to display, via the touch screen display, one or more PDUs associated with a unit load device (ULD) to move within a cargo compartment; receive a selection of an at least one PDU from the one or more PDUs; and, responsive to receiving a command from the operator via a joystick, operate the at least one PDU according to the command received via the joystick.

In various embodiments, in order to drive the cargo as per the at least one command, the PDU controller is configured to send a command to engage the drive roller of the at least one of PDU or the at least one other PDU.

In various embodiments, by each PDU of the plurality of PDUs communicating with the at least one other PDU of the plurality of PDUs, a mesh network of communication is formed by of the plurality of PDUs.

In various embodiments, each of the plurality of PDUs further includes a presence sensor. In various embodiments, the PDU controller is further configured to send a command to engage the drive roller of the at least one PDU in response to receiving a signal from the presence sensor indicating a presence of the cargo.

Also disclosed herein is a cargo handling system. The cargo handling system includes a plurality of power drive units (PDUs) and a human-machine interface (HMI) controller configured to control each of the plurality of PDUs. The HMI controller includes a touch screen display, at least one processor, and a memory operatively coupled to the at least one processor. The memory includes instructions stored thereon that, when executed by the at least one processor, cause the at least one processor to present multiple cargo operating modes to an operator via the touch screen display; responsive to receiving a selection of a cargo operating mode from the multiple cargo operating modes, present a set of operations associated with the cargo operating mode to the operator; and, responsive to receiving a selection of at least one operation from the set of operations associated with the cargo operating mode, send at least one command to at least one power drive unit (PDU) of the plurality of PDUs. The plurality of PDUs operate in a decentralized control architecture, with each PDU of the plurality of PDUs autonomously making decisions based on a current commanded objective of the at least one command and directly communicating with at least one other PDU of the plurality of PDUs. Each PDU in the plurality of PDUs includes a drive roller, a motor configured to rotate the drive roller, and a PDU controller. The PDU controller is configured to directly communicate with the at least one other PDU of the plurality of PDUs to drive cargo as per the at least one command.

In various embodiments, the multiple cargo operating modes include an autonomous mode, a semi-autonomous (semi-auto) mode, a zone mode, and a discrete mode.

In various embodiments, in the autonomous mode, the instructions, when executed by the at least one processor, further cause the at least one processor to load a loading plan for loading a unit load device (ULD) into a cargo compartment; and, responsive to receiving an initiate command from the operator, set high-level objectives for the PDUs to autonomously load the ULD into the cargo compartment according to the loading plan. In various embodiments, in loading the ULD into the cargo compartment, the instructions, when executed by the at least one processor, further cause the at least one processor to display, via the touch screen display, the ULD to be loaded; display, via the touch screen display, an end location in the cargo compartment for the ULD; and display, via the touch screen display, a path the ULD will move within the cargo compartment.

In various embodiments, in the autonomous mode, the instructions, when executed by the at least one processor, further cause the at least one processor to load an unloading plan for unloading a unit load device (ULD) into a cargo compartment; and, responsive to receiving an initiate command from the operator, set high-level objectives for the PDUs to autonomously unload the ULD from the cargo compartment according to the unloading plan. In various embodiments, in unloading the ULD from the cargo compartment, the instructions, when executed by the at least one processor, further cause the at least one processor to display, via the touch screen display, a the ULD to be unloaded; display, via the touch screen display, an end location on an unloader for the ULD; and display, via the touch screen display, a path the ULD will move within the cargo compartment.

In various embodiments, in the semi-autonomous mode, the instructions, when executed by the at least one processor, further cause the at least one processor to receive a selection of a unit load device (ULD) to move within a cargo compartment; receive a selection of a destination location for the ULD; and, responsive to receiving an initiate command from the operator, set high-level objectives for the PDUs to autonomously move the ULD to the destination location.

In various embodiments, in the zone mode, the instructions, when executed by the at least one processor, further cause the at least one processor to receive a selection of a unit load device (ULD) to move within a cargo compartment; receive the selection of at least one operation to be performed in moving the ULD within the cargo compartment; and, responsive to receiving a command from the operator via a joystick, set high-level objectives for the PDUs to autonomously move the ULD according to the command received via the joystick.

In various embodiments, in the discrete mode, the instructions, when executed by the at least one processor, further cause the at least one processor to display, via the touch screen display, one or more PDUs associated with a unit load device (ULD) to move within a cargo compartment; receive a selection of an at least one PDU from the one or more PDUs; and, responsive to receiving a command from the operator via a joystick, operate the at least one PDU according to the command received via the joystick.

In various embodiments, in order to drive the cargo as per the at least one command, the PDU controller is configured to send a command to engage the drive roller of the at least one of PDU or the at least one other PDU. In various embodiments, by each PDU of the plurality of PDUs communicating with the at least one other PDU of the plurality of PDUs, a mesh network of communication is formed by of the plurality of PDUs.

In various embodiments, each of the plurality of PDUs further includes a presence sensor. In various embodiments, the PDU controller is further configured to send a command to engage the drive roller of the at least one PDU in response to receiving a signal from the presence sensor indicating a presence of the cargo.

An aircraft is also disclosed. The aircraft includes a cargo deck and a cargo handling system disposed within the cargo deck. The cargo handling system includes a plurality of power drive units (PDUs) and a human-machine interface (HMI) controller configured to control each of the plurality of PDUs. The HMI controller includes a touch screen display, at least one processor, and a memory operatively coupled to the at least one processor. The memory incudes instructions stored thereon that, when executed by the at least one processor, cause the at least one processor to present multiple cargo operating modes to an operator via the touch screen display; responsive to receiving a selection of a cargo operating mode from the multiple cargo operating modes, present a set of operations associated with the cargo operating mode to the operator; and, responsive to receiving a selection of at least one operation from the set of operations associated with the cargo operating mode, send at least one command to at least one power drive unit (PDU) of the plurality of PDUs. The plurality of PDUs operate in a decentralized control architecture, with each PDU of the plurality of PDUs autonomously making decisions based on a current commanded objective of the at least one command and directly communicating with at least one other PDU of the plurality of PDUs. Each PDU in the plurality of PDUs includes a drive roller, a motor configured to rotate the drive roller, and a PDU controller. The PDU controller is configured to directly communicate with at least one other PDU of the plurality of PDUs to drive cargo as per the at least one command.

The present disclosure may include any one or more of the individual features disclosed above and/or below alone or in any combination thereof. The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with ULDs, in accordance with various embodiments.
FIG. 1B illustrates a portion of a cargo handling system, in accordance with various embodiments.
FIG. 2 illustrates a portion of a cargo handling system, in accordance with various embodiments.
FIG. 3A illustrates a swarm-based power drive system controller for a cargo handling system, in accordance with various embodiments.
FIG. 3B illustrates a functional schematic of the swarm-based power drive system controller, in accordance with various embodiments.
FIG. 3C illustrates a functional schematic of an inertial measurement unit (IMU) that may be used by the swarm-based power drive system controller, in accordance with various embodiments.
FIG. 4A illustrates a loading a cargo loading/unloading plan for a cargo compartment via a human machine interface (HMI) controller, in accordance with various embodiments.
FIG. 4B illustrates an expected order for a cargo loading/unloading plan for a cargo compartment via a HMI controller, in accordance with various embodiments.
FIGS. 5A, 5B, 5C, 5D, 5E, and 5F illustrate a loading of ULDs within a cargo compartment in an autonomous mode via a human machine interface (HMI) controller and a swarm-based power drive system, in accordance with various embodiments.
FIGS. 6A, 6B, 6C, and 6D illustrate a loading ULDs within a cargo compartment in a semi-autonomous mode via a human machine interface (HMI) controller and a swarm-based power drive system, in accordance with various embodiments.
FIGS. 7A, 7B, 7C, and 7D illustrate unloading ULDs within a cargo compartment in a zone mode via a human machine interface (HMI) controller and a swarm-based power drive system, in accordance with various embodiments.
FIGS. 8A and 8B illustrate moving a ULD within a cargo compartment in a discrete mode via a human machine interface (HMI) controller and a swarm-based power drive system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As stated previously, typical cargo handling systems utilize centralized control panels to manage power drive units (PDUs) within defined zones. In typical cargo handling systems, a master control panel (MCP) processes input from operators and directs the PDUs, leading to linear complexity and the need for specific software solutions for different implementations. In typical advanced cargo handling systems, sensors and new human-machine interfaces (HMIs) are added to support higher autonomy levels. However, these advanced cargo handling systems face issues with linear time complexity and complex decision-making and software requirements. Linear time complexity is related to increased decisions for the MCP as a size of the advanced cargo handling system size grows, causing bottlenecks. Complex decision-making and software requirements are related to a reliance of the MCP requiring sophisticated software for various scenarios, potentially leading to unique software for different systems.

Disclosed herein is a swarm-based power drive system with scalable levels of autonomy. In various embodiments, the swarm-based power drive system with scalable levels of autonomy enhances and automates cargo handling because the swarm-based power drive system with scalable levels of autonomy is designed to adapt to different aircraft configurations with minimal adjustments and supports multiple autonomy levels through a data-centric architecture, ensuring compatibility with various sensors and control interfaces. In various embodiments, the swarm-based power drive system with scalable levels of autonomy provides for a decentralized control such that each PDU operates autonomously within a "swarm" network, coordinating movements and optimizing container handling without a MCP thereby reducing complexity and enhancing resilience. The swarm-based power drive system with scalable levels of autonomy improves scalability of control autonomy by adapting to different operational needs and future automation advancements. In various embodiments, the swarm-based power drive system with scalable levels of autonomy provides an autonomous control mode that executes predefined loading/unloading plans with relatively minimal human intervention. In various embodiments, the swarm-based power drive system with scalable levels of autonomy provides a semi-autonomous control mode that allows the operator to select tasks or destinations with the swarm-based power drive system then handling the movement of the cargo thereafter. In various embodiments, the swarm-based power drive system with scalable levels of autonomy provides a zone control mode such that an operator is enabled to control cargo within specific zones enhanced by swarm communications. In various embodiments, the swarm-based power drive system with scalable levels of autonomy provides a discrete control mode that allows the operator to have direct control over individual PDUs for precise adjustments. In various embodiments, the swarm-based power drive system with scalable levels of autonomy provides for aircraft platform scalability that adapts to different cargo hold configurations and requirements without unique software for each platform and with configuration data updated parametrically. In various embodiments, the swarm-based power drive system with scalable levels of autonomy provides for a scalable mesh data network where the PDUs primarily communicate with immediate neighbors, maintaining constant complexity for efficient operations. In various embodiments, the swarm-based power drive system with scalable levels of autonomy provides for system configuration management such that configuration data for the cargo hold may be pre-installed or broadcasted at startup, ensuring PDUs have the correct setup. In various embodiments, the swarm-based power drive system with scalable levels of autonomy provides for each PDU having localization and self-awareness. In that regard, in various embodiments, each PDU is aware of its position within the cargo handling system, which is crucial for coordinating cargo movements and ensuring efficiency. In various embodiments, the swarm-based power drive system with scalable levels of autonomy provides for cargo tracking such that the swarm PDUs identify and estimate cargo sizes and positions, maintaining this information during power-off periods for quick resumption of operations. In various embodiments, the swarm-based power drive system with scalable levels of autonomy provides for system failure resilience utilizing a decentralized architecture that reduces single-point failure risks and allows seamless re-integration of PDUs upon reactivation. In various embodiments, the swarm-based power drive system with scalable levels of autonomy provides for operator interface simplification by simplifying control panel by delegating decision-making to PDUs thereby reducing hardware complexity and operator cognitive load.

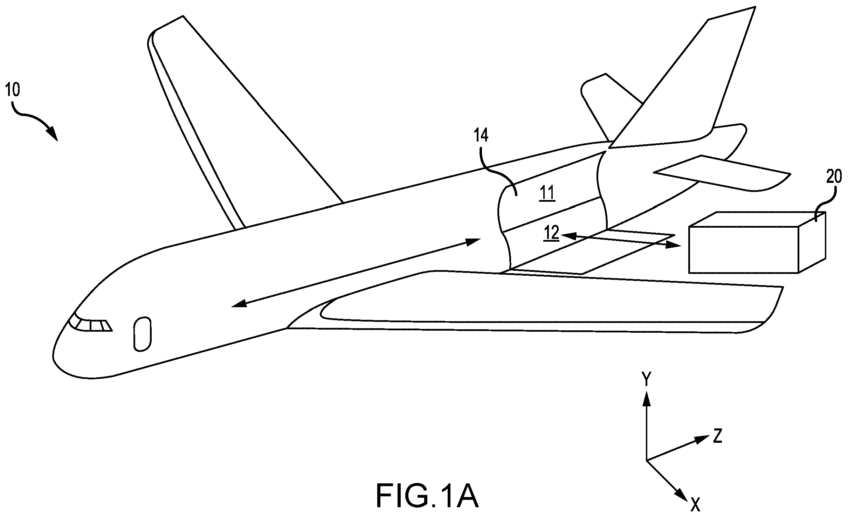

With reference to FIG. 1A, a schematic view of an aircraft 10 having a cargo deck 12 located within a cargo compartment 14 is illustrated, in accordance with various embodiments. The aircraft 10 may include a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

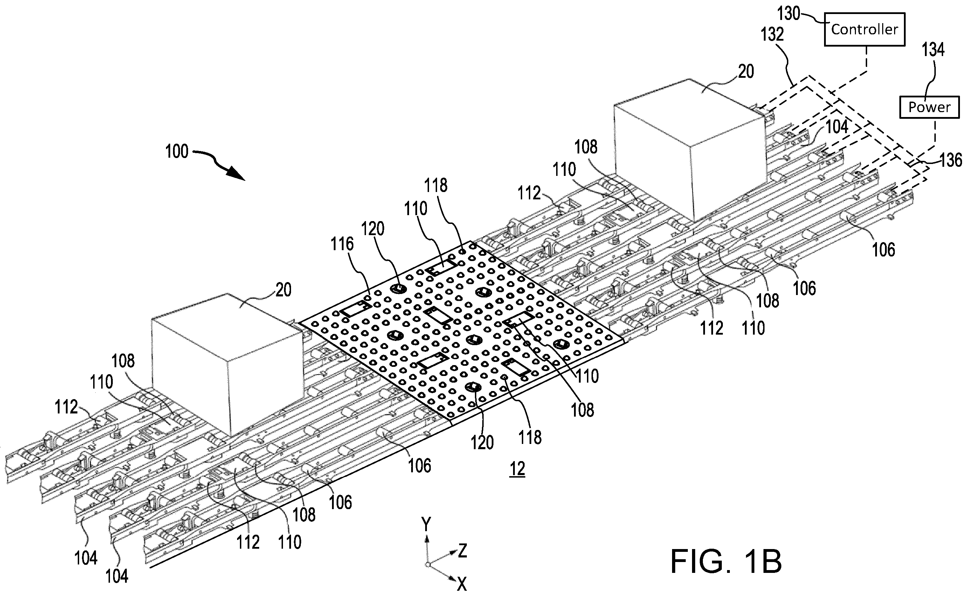

Referring now to FIG. 1B, a portion of cargo deck 12 is illustrated with XYZ axes for ease of illustration, in accordance with various embodiments. Cargo deck 12 includes cargo handling system 100. Cargo handling system may include one or more ball panels 116 and one or more roller trays 104. Ball panels 116 may include a plurality of freely rotating conveyance balls 118. Roller trays 104 include a plurality of freely rotating conveyance rollers 106. Roller trays 104 may be positioned longitudinally along cargo deck 12. In various embodiments, a number of PDUs 110 may be mounted along cargo deck 12. For example, PDUs 110 may be located in ball panels 116 and/or in roller trays 104. PDUs 110 are configured to propel cargo over conveyance balls 118 and the freely rotating conveyance rollers 106 and across cargo deck 12.

PDUs 110 include one or more drive rollers 108, which may be actively controlled by a motor. PDUs 110, including drive rollers 108, provide a mechanism upon which the ULD 20 is propelled over the freely rotating conveyance rollers 106. The ULD 20 may contact the drive rollers 108 of PDUs 110 located within the roller trays 104 to provide motive force for the ULD 20. Each of PDUs 110 may include an actuator, such as an electrically operated motor, which drives one or more drive rollers 108. In various embodiments, a drive roller 108 may be raised by a PDU of PDUs 110 from a lowered position beneath the conveyance surface 102 to an elevated position above conveyance surface 102. As used with respect to cargo handling system 100, the term "beneath" may refer to the negative y-direction, and the term "above" may refer to the positive y-direction with respect to the provided XYZ axes. In the elevated position, the drive roller 108 contacts and drives the overlying the ULD 20 that rides on the freely rotating conveyance rollers 106. In accordance with various embodiments, the drive roller 108 may be held or biased in a position above the conveyance surface by a spring.

In various embodiments, a number of brake rollers 112 may be located along cargo deck 18. For example, brake rollers 112 may be mounted in roller trays 104. In various embodiments, one or more brake caster(s) 120 may be coupled to ball panels 116. Stated differently, ball panels 116 may include brake caster(s) 120. Brake caster 120 may be configured to swivel (or rotate) relative to ball panels 116, thereby by allowing brake caster 120 to align with the direction of movement of the ULD 20 over ball panels 116. In various embodiments, brake rollers 112 and brake casters 120 are configured to rotate freely in a first circumferential direction and restrict rotation in the opposite circumferential direction. In this regard, brake rollers 112 and brake casters 120 may slow or prevent translation of cargo across cargo deck 12 in certain directions.

Cargo handling system 100 may include a system controller 130 in communication with the PDUs 110 via a plurality of channels 132. Channels 132 may be a data bus, such as a controller area network (CAN) bus and may include one or more CAN busses or multi-CANs. In various embodiments, an operator may provide instructions to PDUs 110 via the system controller 130. In that regard, in various embodiments, cargo handling system 100 may receive operator input through system controller 130 to instruct PDUs 110 to manipulate the ULD 20 into a desired position on cargo deck 12. However, in various embodiments, each of the PDUs 110 may not activate until communication is established by an adjacent, or substantially adjacent, one of PDUs 110, as described hereafter. In that regard, system controller 130 and PDUs 110 may each include a general-purpose processor, a digital signal processor (DSP), an application specific integrated circuit (ASIC), a field programmable gate array (FPGA) or other programmable logic device, discrete gate or transistor logic, discrete hardware components, or any combination thereof.

System program instructions and/or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals *per se*. Additionally, in various embodiments, the cargo handling system 100 may also include a power source 134 configured to supply power to the PDUs 110, brake rollers 112, and/or other components of cargo handling system 100 via one or more power busses 136.

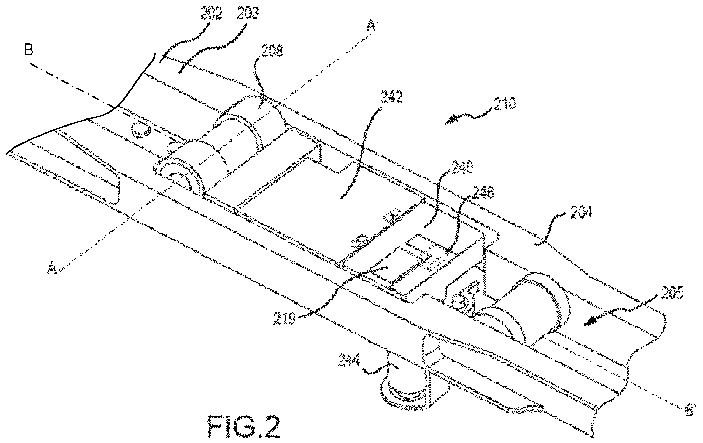

Referring now to FIG. 2, a PDU 210, such as for example, one of the plurality of PDUs 110 described above with reference to FIG. 1B, is illustrated disposed in a tray 204, in accordance with various embodiments. The PDU 210 may rotate the drive roller 208 in one of two possible directions (e.g., clockwise or counterclockwise) to propel the ULD in a direction parallel to the longitudinal axis B-B' of the tray 204. The PDU 210 may include a unit controller 240, a unit motor 242 and a drive roller 208 mounted within an interior section 205 of the tray 204. The drive roller 208 may include a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 of the tray 204. At least partial extension of the drive roller 208 above the conveyance surface 202 facilitates contact between the drive roller 208 and a lower surface of a ULD, such as, for example, the ULD 20 described above with reference to FIG. 1B. In various embodiments, the unit controller 240 is configured to control operation of the drive roller 208. The unit controller 240 may include a processor and a tangible, non-transitory memory. The processor may include one or more logic modules that implement logic to control rotation and elevation of the drive roller 208. In various embodiments, the PDU 210 may include other electrical devices to implement drive logic. In various embodiments, a connector 244 is used to couple the electronics of the PDU 210 to a power source and a system controller, such as, for example, the system controller 130 described above with reference to FIG. 1B. The connector 244 may have pins or slots and may be configured to couple to a wiring harness having pin programing. The unit controller 240 may be configured to receive commands from the system controller through the connector 244 in order to control operation of the unit motor 242.

In various embodiments, the PDU 210 may also include a communication device 246 that is configured to provide wired or wireless communication in order to transmit or receive information or data - e.g., operational status or location data. In various embodiments, the wireless communication may be via near filed communications (NFC), Bluetooth, or Wi-Fi, among others. In various embodiments, the information or data may include information from other PDUs, as described hereafter, in order that the PDU 210 operates as part of a "swarm" that is implemented by the unit controller 240. In various embodiments, the term "swarm" refers to collective behavioral characteristics of a group of decentralized, autonomous devices, such as the PDUs described herein. In that regard, in various embodiments, the PDUs operate in a decentralized control architecture, with each PDU of the PDUs autonomously making decisions based on a current commanded objective of at least one command presented by the HMI and directly communicating with at least one other PDU of the plurality of PDUs. Additionally, a ULD sensor 219 may be disposed within the tray 204 and configured to detect the presence of a ULD as the ULD is positioned over or proximate to the PDU 210 or the restraint device 214. In various embodiments, as described hereafter, the unit controller 240 may utilize the presence data to operate as part of the "swarm." In that regard, in various embodiments, the ULD sensor 219 may include any type of sensor capable of detecting the presence of a ULD. For example, in various embodiments, the ULD sensor 219 may include a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, or an ultrasonic sensor, among others.

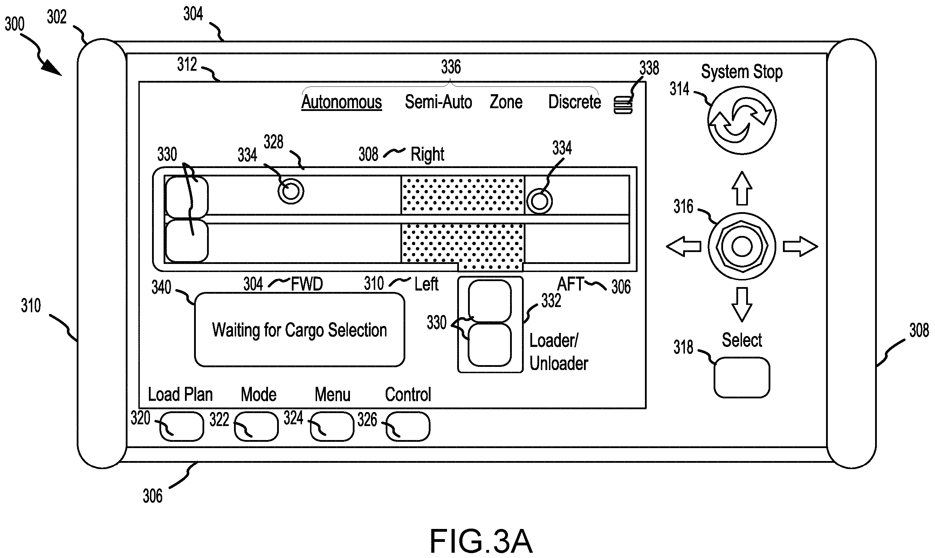

Referring to FIG. 3A, a human machine interface (HMI) controller with scalable levels of autonomy is illustrated, in accordance with various embodiments. In various embodiments, the HMI controller 300 is a hand-held device, may be of any appropriate size, shape, and/or configuration, and includes a housing 302. This housing 302 (or more generally the HMI controller 300) includes a forward end 304, an aft or rear end 306 that is oppositely disposed from the forward end 304 in a longitudinal dimension for the HMI controller 300, a right side 308, and a left side 310 that is oppositely disposed from the right side 308 in a lateral dimension for the HMI controller 300.

In various embodiments, the HMI controller 300 includes a touch screen display 312, an emergency stop button 314, a joystick 316, and various physical and/or programmable function buttons, i.e. select button 318, load plan button 320, mode button 322, menu button 324, and control button 326. In various embodiments, the touch screen display 312 is a resistive or capacitive screen configured to display information associated with the particular cargo compartment 328 that is currently being loaded or unloaded, such as a forward (FWD) direction of the cargo compartment 328, an aft (AFT) direction of the cargo compartment 328, a right side of the cargo compartment 328, and a left side of the cargo compartment 328. In various embodiments, the touch screen display 312 displays ULDs 330, including ULDs already within the cargo compartment 328 and ULDs on cargo loader/unloader 332. In various embodiments, the touch screen display 312 displays humans 334 within the cargo compartment 328. In various embodiments, a location of the ULDs 330 and the humans 334 within the cargo compartment 328 is detected via various sensors or cameras, among others. In various embodiments, these detected information is communicated back to a system controller, such as system controller 130 of FIG. 1, and then onto the HMI controller 300 for display on the touch screen display 312. In various embodiments, the system controller utilizes a neural network trained through machine learning to determine the position of the humans 334 and the ULDs 330 and the confidence of the positions is proportional to an outer dimension of the object, i.e. square, circle, rectangle, among others, representing the humans 334 or the ULDs 330. In various embodiments, the touch screen display 312 may differentiate the humans 334 from the ULDs 330 utilizing different colors, such as green for ULDs 330 and blue for humans 334. In various embodiments, the touch screen display 312 may provide an indication of a currently selected control mode from a set of control modes 336, i.e. one of autonomous, semi-autonomous (semi-auto), zone, or discrete, utilizing highlighting and/or underlining. In various embodiments, the touch screen display 312 displays a menu 338 from which an operator may access to select various options for loading or unloading of ULDs into or out the cargo compartment 328. In various embodiments, the touch screen display 312 also provides a status indicator 340 that indicates to the user one or more of a next action that is expected, a current action being executed, or an error in the system, remaining battery power for the HMI controller 300, among others.

In various embodiments, in various modes, i.e. a zone mode, the operator may use the joystick 316. In various embodiment, the joystick 316 may provide at least one of proportional directional and/or proportional velocity control. In various embodiments, in the various modes, the touch screen display 312 indicates a direction of the forward end 304 of the HMI controller 300 relative to relative to an orientation of a cargo compartment 328. In various embodiments, establishing the frame of reference for the HMI controller 300 relative to the orientation of the cargo compartment 328 may be achieved by utilizing a continuous comparison to a fixed device in the cargo compartment 328. In various embodiments, the fixed device measures orientation via an internal compass, i.e. a magnetometer. In various embodiments, the magnetometer of the fixed device within the cargo compartment 328 is continuously or at short intervals compared with magnetometer measurements in the HMI controller 300. In various embodiments, an embedded inertial measurement unit (IMU) sensor in the HMI controller 300 may be used to determine the orientation. In various embodiments, establishing the frame of reference for the HMI controller 300 relative to the orientation of the cargo compartment 328 may be achieved by calibrating at a fixed location within the cargo compartment 328, such as a docking station or molded pocket in which the HMI controller 300 fits. In various embodiments, upon establishing a point of origin, the HMI controller 300 utilizes its internal IMU to track its orientation relative to the orientation of the cargo compartment 328.

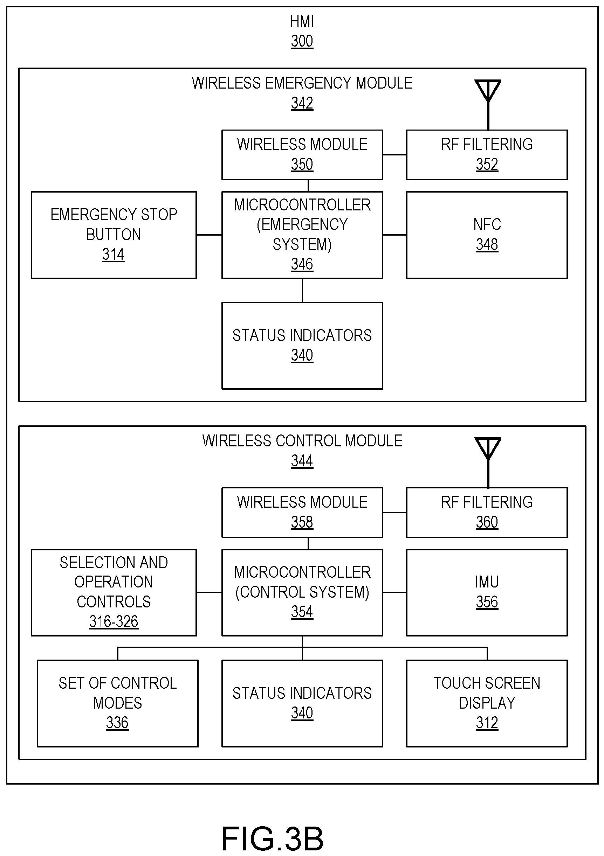

A functional schematic of the HMI controller 300 is illustrated in FIG. 3B, in accordance with various embodiments. In various embodiments, the HMI controller 300 includes a wireless emergency module 342 and a wireless control module 344. In various embodiments, the wireless emergency module 342 is configured to communicate with a cargo emergency station (CES). In various embodiments, the CES may be located and integrated into the fuselage of the aircraft in the cargo loading system similar to the other control panels. In various embodiments, the CES may be positioned near a doorway area for easy access when entering the cargo compartment. In various embodiments, the CES is a line replaceable unit (LRU) that is part of a cargo emergency subsystem. In various embodiments, the CES acts as the "bridge" between the wireless emergency module 342 and the system controller, such as system controller 130 of FIG. 1B. In that regard, in various embodiments, the CES is electro-mechanically coupled to the aircraft and is connected in series with the functional-drive power provided to the cargo loading power drive system controlled by the system controller. In various embodiments, while communicating with the wireless emergency module 342 over an independent wireless network, the CES may also communicate with other electrical LRUs using the cargo loading systems CAN bus. In various embodiments, the CES has two modes of operation. The CES is typically in normal operating mode unless there has been an identified emergency condition. In the normal operating mode, the CES does not interrupt the drive power associated with the cargo loading system power drive units. In various embodiments, in an emergency event, the CES transitions to an emergency operating mode, where the CES interrupts and effectively removes the drive power associated with the cargo loading system power drive units.

In various embodiments, the wireless emergency module 342 includes a microcontroller 346, i.e. a processor and memory, coupled to the emergency stop button 314, the status indicator 340, a near field communication (NFC) circuitry 348 configured to pass and receive information with the wireless cargo handling control device, and a wireless transceiver 350 configured to provide wireless communication which may be filtered via radio frequency (RF) filter 352. In various embodiments, the wireless emergency module 342 is configured to communicate with a cargo emergency station within the system controller 130 of FIG. 1B. In various embodiments, the wireless emergency module 342 is configured to provide emergency controls and indicators, which includes activation of the emergency stop button 314 and appropriate messages dependent on the state of emergency. In various embodiments, the wireless emergency module 342 may be configured to communicate via the wireless transceiver 350 over several wireless standards, i.e. wireless 802.11 Standard (Wi-Fi), Bluetooth, Zigbee, Thread, or infrared spectrum using Line-Of-Sight communication, among others. In that regard, the wireless transceiver 350 may include or be coupled to circuitry, i.e. filters, antennas, or network processing units, among others, associated with Wi-Fi, Bluetooth, Zigbee, Thread, or infrared spectrum using Line-Of-Sight communication. In various embodiments, the wireless emergency module 342 also utilizes NFC circuitry 348 to communicate with other NFC modules or tags within the cargo loading system, which provides for an additional wireless communication medium that is limited to roughly 3cm or less in transmission lengths.

In various embodiments, the wireless control module 344 is configured to communicate with a cargo control station (CCS). In various embodiments, the CCS may be located and integrated into the fuselage of the aircraft in the cargo loading system similar to the other control panels. In various embodiments, the CCS may be positioned near a doorway area for easy access when entering the cargo compartment. In various embodiments, the CCS is a LRU that is part of the cargo control subsystem. In various embodiments, the CCS acts as the "bridge" between the wireless control module 344 and the physical cargo loading system. In that regard, in various embodiments, the cargo control station is electro-mechanically coupled to the aircraft and is connected in series with the functional-drive power provided to the cargo loading power drive system. In various embodiments, while communicating with the wireless control module 344 over an independent wireless network, the CCS may also communicate with other electrical LRUs using the cargo loading systems CAN bus. In various embodiments, the CCS has two modes of operation. In various embodiments, the CCS is typically in normal operating mode unless there has been an identified emergency condition. In various embodiments, in the normal operating mode, the CCS does not interrupt the drive power associated with the cargo loading system power drive units. In various embodiments, in an emergency event, the CCS transitions to an emergency operating mode, where the CCS interrupts and effectively removes the drive power associated with the cargo loading system power drive units.

In various embodiments, the wireless control module 344 includes a microcontroller 354, i.e. a processor and memory, coupled to the selection and operation controls, i.e. the joystick 316, the select button 318, the load plan button 320, the mode button 322, the menu button 324, and the control button 326; the set of control modes 336, the status indicator 340, the touch screen display 312, an inertial measurement unit (IMU) 356 configured to determine the orientation of the HMI controller 300, and a wireless transceiver 358 configured to provide wireless communication which may be filtered via radio frequency (RF) filter 360. In various embodiments, the wireless control module 344 may be configured to communicate via the wireless transceiver 358 over sever wireless standards, i.e. wireless 802.11 Standard (Wi-Fi), Bluetooth, Zigbee, Thread, or infrared spectrum requiring Line-Of-Sight communication, among others. In that regard, the wireless transceiver 358 may include or be coupled to circuitry, i.e. filters, antennas, or network processing units, among others, associated with Wi-Fi, Bluetooth, Zigbee, Thread, or infrared spectrum using Line-Of-Sight communication. In that regard, in various embodiments, the wireless transceiver 358 may be configured to communicate over several wireless standards, however it is likely to use 802.15.4 for its deterministic and low power consumption properties.

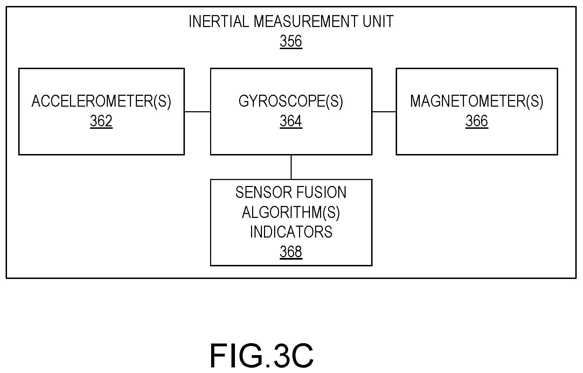

FIG. 3C is a functional schematic of an inertial measurement unit (IMU) 356 that may be used by the HMI controller 300, in accordance with various embodiments. In various embodiments, the IMU 356 includes one or more accelerometers 362, one or more gyroscopes 364, and optionally one or more magnetometers 366, collectively referred to as sensors. Output from these sensors 362, 364, and 366 may be output to and used by one or more sensor fusion algorithms 368 to determine the orientation of the HMI controller 300 in space. The IMU(s) 356 used by the HMI controller 300 may also be used to determine when the HMI controller 300 has been dropped (e.g., via detecting a sudden change in position and orientation). Such a detected drop may be used to at least temporarily deactivate the current cargo operation.

In various embodiments, the memory of the microcontroller 346 and the microcontroller 354 is configured to store information used in running the HMI controller 300. In various embodiments, the memory includes a computer-readable storage medium, which, in various embodiments, includes a non-transitory storage medium. In various embodiments, the term "non-transitory" indicates that the memory is not embodied in a carrier wave or a propagated signal. In various embodiments, the non-transitory storage medium stores data that, over time, changes (e.g., such as in a random-access memory (RAM) or a cache memory). In various embodiments, the memory includes a temporary memory. In various embodiments, the memory includes a volatile memory. In various embodiments, the volatile memory includes one or more of RAM, dynamic RAM (DRAM), static RAM (SRAM), and/or other forms of volatile memories. In various embodiments, memory is configured to store computer program instructions for execution by the one or more processors of the microcontroller 346 and the microcontroller 354. In various embodiments, applications and/or software running on HMI controller 300 utilize(s) memory in order to temporarily store information used during program execution. In various embodiments, memory includes one or more computer-readable storage media. In various embodiments, memory is configured to store larger amounts of information than volatile memory. In various embodiments, memory is configured for longer-term storage of information. In various embodiments, memory includes non-volatile storage elements, such as, for example, electrically programmable memories (EPROM), electrically erasable and programmable (EEPROM) memories, flash memories, floppy discs, magnetic hard discs, optical discs, and/or other forms of memories.

In various embodiments, the one or more processors of the microcontroller 346 and the microcontroller 354 are configured to implement functionality and/or process instructions. In various embodiments, the one or more processors is configured to process computer instructions stored in memory. In various embodiments, the one or more processors includes one or more of a microprocessor, a controller, a digital signal processor (DSP), an application specific integrated circuit (ASIC), a field-programmable gate array (FPGA), or other equivalent discrete or integrated logic circuitry.

System program instructions and/or processor instructions may be loaded onto memory. The system program instructions and/or processor instructions may, in response to execution by operator, cause the one or more processors to perform various operations. In particular, and as described in further detail below, the instructions may allow the one or more processors to determine the orientation of the HMI controller 300. The term "non-transitory" is to be understood to remove only propagating transitory signals per se from the claim scope and does not relinquish rights to all standard computer-readable media that are not only propagating transitory signals per se.

In various embodiments, responsive to the operator moving around the cargo compartment 328, an orientation of the HMI controller 300 within the cargo compartment 328 is likely changing frequently. In various embodiments, such a change in the orientation of the HMI controller 300 may cause the operator to be confused on which command is needed to move ULDs in a particular direction given the operator's current orientation and/or the orientation of the HMI controller 300.

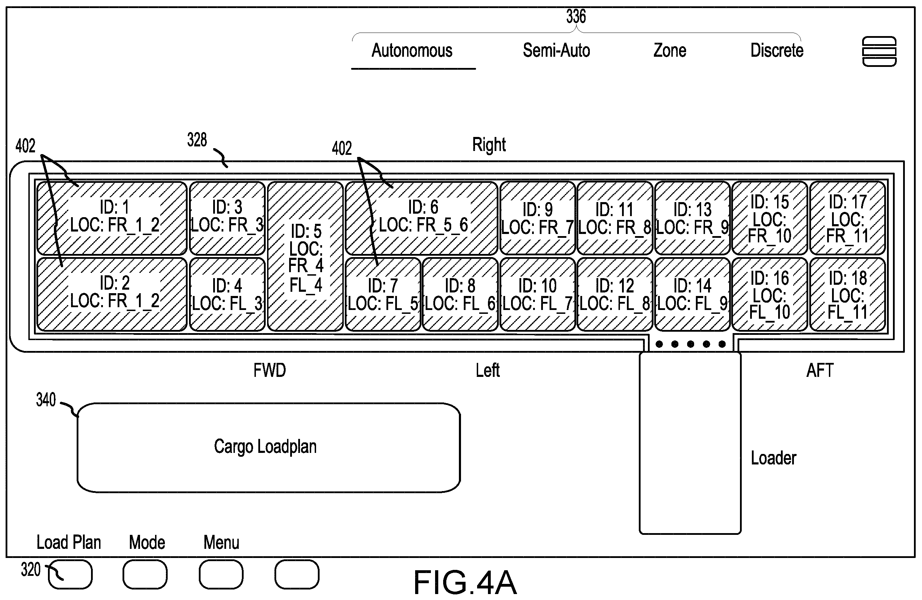

Referring to FIG. 4A, a cargo loading/unloading plan for a cargo compartment 328 via an HMI controller 300 is illustrated, in accordance with various embodiments. As discussed previously, the HMI controller 300 provides a set of control modes 336, i.e. one of autonomous, semi- autonomous (semi-auto), zone, or discrete. In various embodiments, the operator may load a cargo loading/unloading plan by either selecting various ones of the set of control modes 336 or by selecting load plan button 320 from the various physical buttons. In various embodiments, the cargo loading/unloading plan is a predetermined plan for where each ULD 402 is intended to go or is located, what contents or weight is in the ULD 402, and even the order of which the ULD 402 should arrive to the airplane cargo loading system or leave the airplane cargo loading system. In various embodiments, responsive to receiving a selection of a control mode from the set of control modes 336 or responsive to receiving a selection of the load plan button 320, the HMI controller 300 is configured to load a cargo loading/unloading plan for the particular cargo compartment 328 with which the HMI controller 300 is currently communicating. In various embodiments, the HMI controller 300 may transfer a cargo loading/unloading plan using a preprogrammed NFC card or tag and by being placed within a predetermined distance of an NFC communication device located within the cargo compartment 328.

In various embodiments, the NFC circuitry 348 allows for the HMI controller 300 to pass information to and receive information from the system controller, such as system controller 130 of FIG. 1B. In that regard, when the swarm-based power drive system controller 400 is within range of the NFC communication device located within the cargo compartment 328, the HMI controller 300 may indicate via the status indicator 340 the passing and/or receiving of information between the HMI controller 300 and the system controller. Accordingly, in various embodiments, the NFC circuitry 348 may operate at a frequency, for example 13.5MHz, and has transmission ranges of approximately 4cm (approximately 1.575 inches (4 cm)) or less, thereby allowing the HMI controller 300 to communicate with the system controller over NFC. In that regard, in various embodiments, the cargo loading/unloading plan may then be transferred to the HMI controller 300, and the HMI controller 300 may notify the operator via the status indicator 340 that the cargo loading/unloading plan has been identified. In various embodiments, the operator may then navigate their way to the view of the load plan using the various controls provided by the HMI controller 300.

In various embodiments, at higher levels of autonomy, such as autonomous and/or semi-autonomous, more complex information may be provided via the touch screen display 312 of the HMI controller 300 to the operator, such as locations of ULDs, which ULDs are moving, and the paths they are traveling. In various embodiments, being able to quickly and conveniently interact with this information is done with the touch screen display 312. In various embodiments, locations of ULDs, people, and other obstacles are perceived via a perception system. In various embodiments, the perception system manages the sensing and interpreting of the cargo system environment for identifying and localizing ULDs, humans, and/or foreign object debris (FOD), among others. In various embodiments, the perception system is a combination of multiple different sensors including, but not limited to, cameras, stereo cameras, lidar, active infrared, and/or sonar, among others, within the cargo compartment 328. In various embodiments, the information detected by the perception system is communicated to the system controller and then onto the HMI controller 300. In various embodiments, responsive to the HMI controller 300 determining that that the received information may no longer confidently identify and localize objects using the perception system, the HMI controller 300 may automatically reduce the level of autonomy, i.e. from autonomous to semi-autonomous or semi-autonomous to zone or discrete. In that regard, the HMI controller 300 provides added value in that the HMI controller 300 may handle a transition to a lower control level levels of autonomy and may provide a wireless experience for manual control in which the operator controls the cargo handling system using physical buttons, such as select button 318, menu button 324, and control button 326, and/or the joystick 316 of FIG. 3A during the cargo operations.

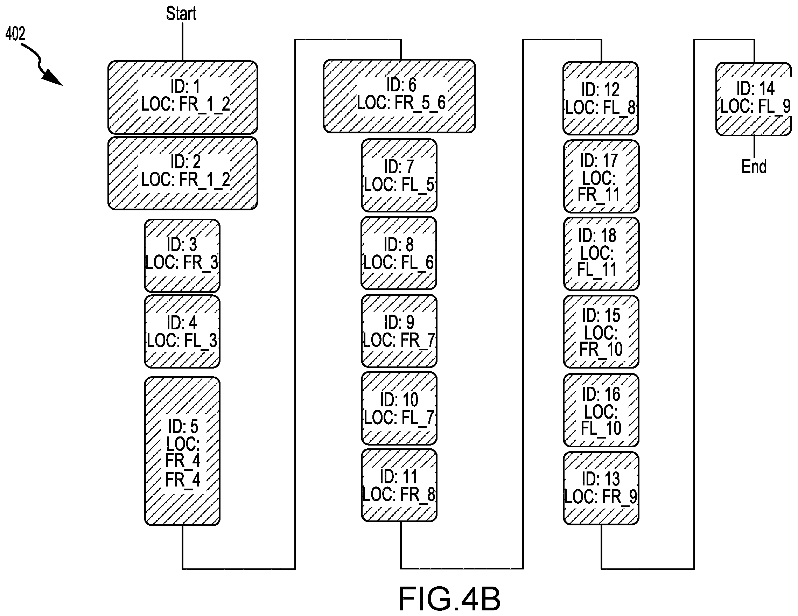

Referring to FIG. 4B, an expected order for a cargo loading/unloading plan for a cargo compartment 328 via an HMI controller 300 is illustrated, in accordance with various embodiments. In various embodiments, in loading the cargo, the HMI controller 300 may expect to receive ULDs 402 with IDs 1-12 in numerical order then ID 17, ID 18, ID 15, ID 16, ID 13, and finally ID 14, so as to load the cargo compartment 328 of FIG. 4A efficiently.

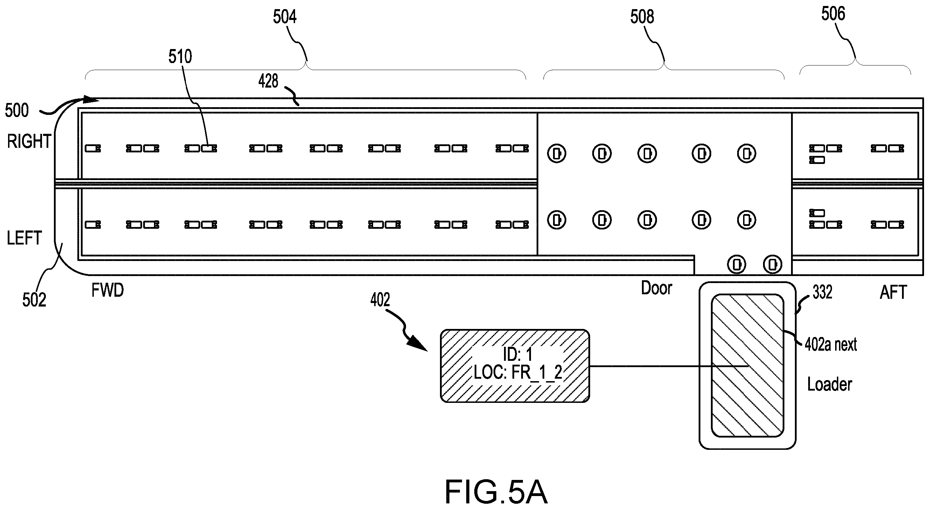

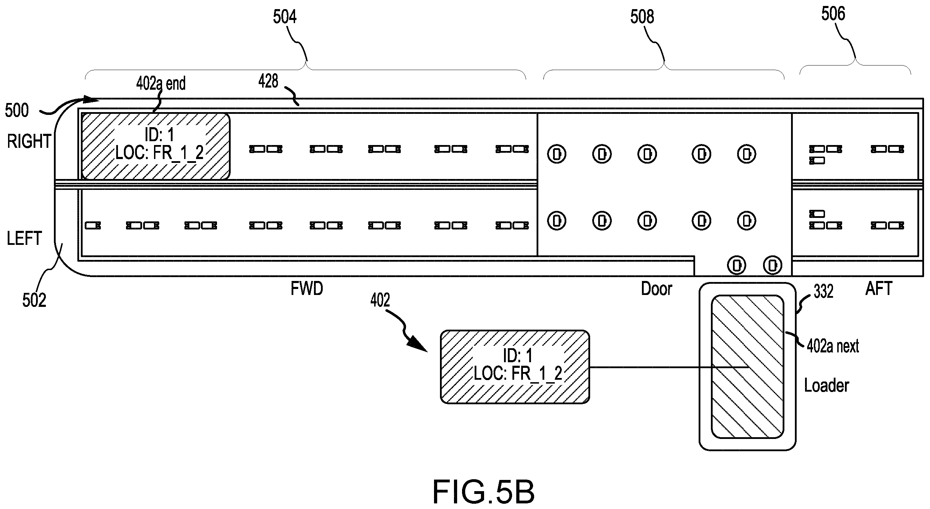

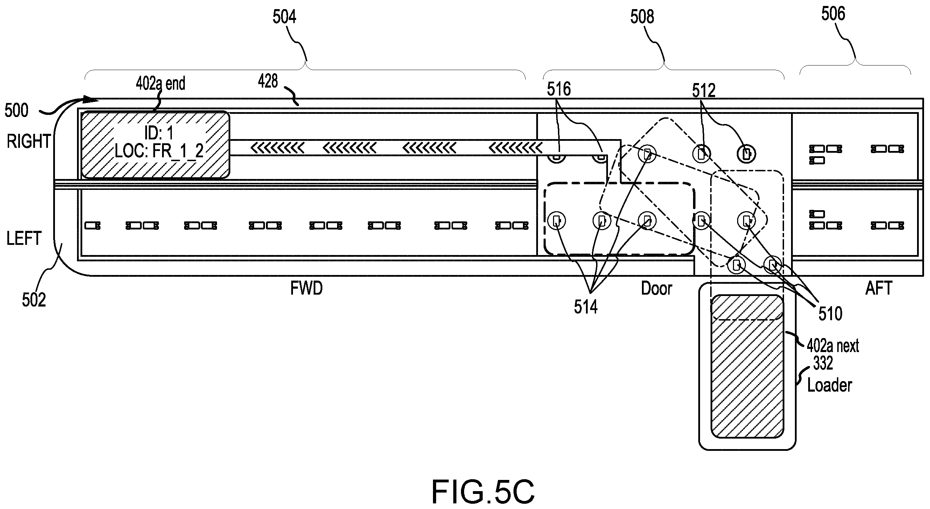

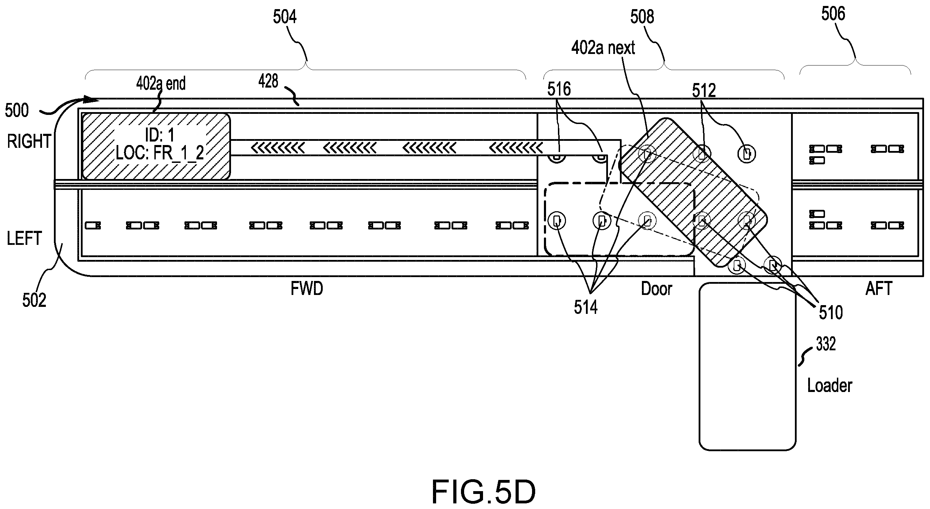

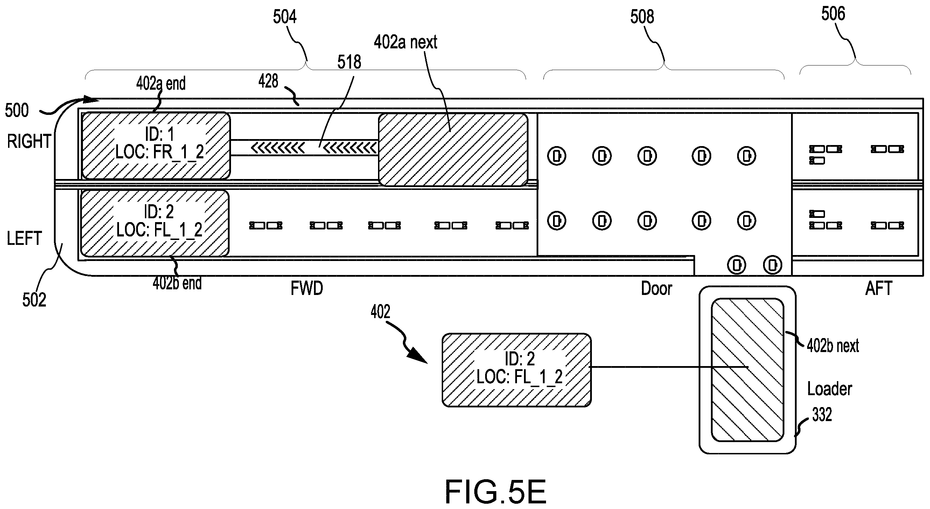

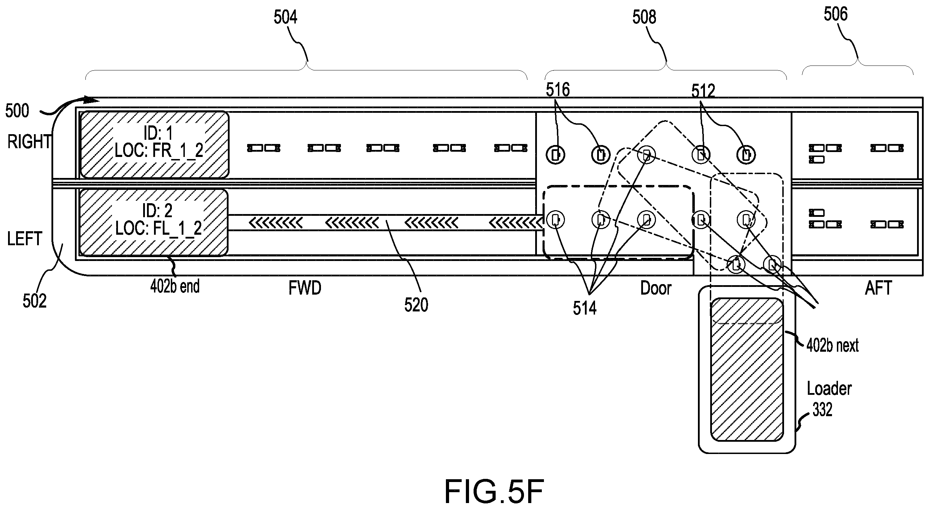

Referring to FIGS. 5A, 5B, 5C, 5D, 5E, and 5F, a loading of ULDs within a cargo compartment 328 in an autonomous mode via a human machine interface (HMI) controller 300 and a swarm-based power drive system is illustrated, in accordance with various embodiments. Referring also to FIG. 3A, in various embodiments, when the HMI controller 300 is in an autonomous mode and as per a loaded cargo loading plan, the operator presses start via the status indicator 340 to initiate loading of the ULD 402 ID 1. In that regard, in various embodiments, the HMI controller 300, via the touch screen display 312, displays a loading plan to the operator, such as the loading plan illustrated in FIGS. 4A and 4B, and responsive to the operator selecting start via the status indicator 340, the HMI controller 300 operates move the ULDs 402 ID 1 into the cargo compartment 328.

In various embodiments, the HMI controller 300 operates with a cargo handling system 500 positioned on the cargo deck 502 of an aircraft is illustrated, in accordance with various embodiments. In various embodiments, the cargo handling system 500 may include a plurality of forward PDUs 504, a plurality of aft PDUs 506, a plurality of loading/unloading area PDUs 508. In various embodiments, the plurality of forward PDUs 504 and the plurality of aft PDUs 506, which are located on both a right side and a left side of the aircraft, are bidirectional PDUs, such that the plurality of forward PDUs 504 and the plurality of aft PDUs 506 are configured to drive ULDs in forward and aft directions. In various embodiments, the plurality of loading/unloading area PDUs 508 are omnidirectional PDUs, such that the plurality of loading/unloading area PDUs 508 are configured to drive ULDs in forward, aft, left, or right directions.

In various embodiments, each of the plurality of forward PDUs 504, the plurality of aft PDUs 506, and the plurality of loading/unloading area PDUs 508 are configured to work as a swarm such that each of the plurality of forward PDUs 504, the plurality of aft PDUs 506, and the plurality of loading/unloading area PDUs 508 are configured to require minimal input from the operator to successfully load and unload cargo and thus, may scale to many types of cargo configurations. In that regard, each swarm PDU, such as PDU 510, is aware of its location within the cargo handling system 500 and is able to communicate with one or more other PDUs of the plurality of forward PDUs 504, the plurality of aft PDUs 506, and the plurality of loading/unloading area PDUs 508 to determine when and how to move a ULD, such as ULD 402 ID 1 into its designated end location on the cargo deck 502 during loading or off of the cargo deck 502 from its location during unloading. Accordingly, in various embodiments, each of the plurality of forward PDUs 504, the plurality of aft PDUs 506, and the plurality of loading/unloading area PDUs 508 communicate translate high level information to other one(s) of the plurality of forward PDUs 504, the plurality of aft PDUs 506, and the plurality of loading/unloading area PDUs 508 such as one or more of ULD locations, objectives/goals provided by the operator, or error statuses, among others.

In various embodiments, when communicating, each of the plurality of forward PDUs 504, the plurality of aft PDUs 506, and the plurality of loading/unloading area PDUs 508 take advantage of their proximity, mainly interacting with other ones of the plurality of forward PDUs 504, the plurality of aft PDUs 506, and the plurality of loading/unloading area PDUs 508 in their immediate vicinity. This "swarm" type of communication approach maintains a constant complexity in their design, diverging from the linear complexity of traditional control applications. In various embodiments, this type of communication method facilitates a mesh concept, independent of specific communication bus architectures present in current cargo systems. In various embodiments, the term "mesh" refers to a system where one node directly, dynamically, and non-hierarchically interacts with other nodes, such as one PDU directly, dynamically, and non-hierarchically interacting with other PDUs. In various embodiments, this type of communication method further aligns with scalability, as each swarm PDU may be strategically positioned throughout the cargo handling system 500, with the same swarm PDU adaptable to any compatible platforms. In that regard, in various embodiments, once installed and powered on, each swarm PDU establishes communication to fulfill cargo loading/unloading objectives.

In various embodiments, the "mesh" happens with the data, which may be agnostic to the physical networking of the power drive system. In various embodiments, all the plurality of forward PDUs 504, the plurality of aft PDUs 506, and the plurality of loading/unloading area PDUs 508 may be on a same local bus and therefore, have direct path communication too all other ones of the plurality of forward PDUs 504, the plurality of aft PDUs 506, and the plurality of loading/unloading area PDUs 508 on their bus. However, in various embodiments, the "swarm" configuration reduces or eliminates the need to process all information from all other PDUs, but rather only the PDUs that directly impact the functionality of each individual PDU subjectively. In that regard, in various embodiments, depending on the system configuration, which is discussed hereafter, each PDU of the plurality of forward PDUs 504, the plurality of aft PDUs 506, and the plurality of loading/unloading area PDUs 508 may determine which other PDU(s) of the plurality of forward PDUs 504, the plurality of aft PDUs 506, and the plurality of loading/unloading area PDUs 508 to communicate with.

In various embodiments, the HMI controller 300 may identify to the operator a next ULD to be loaded, i.e. ULD 402a next, i.e. ULD 402 ID 1, as illustrated in FIG. 5A, as well as an end location. i.e. ULD 402a end, as is illustrated in FIG. 5B. In various embodiments, with regard to FIG. 5C, initially, a ULD 402a next is currently on a loading platform waiting to be loaded onto a cargo deck 502 of the aircraft and the operator, via the HMI controller 300 and the loading plan, is providing input to cargo handling system 500 and to all of the swarm PDUs 504, 506, 508 to identify a direction that the ULD 402a next is to be moved, i.e. to identify that the ULD 402a next is to be rotated, to identify that the ULD 402a next is to be positioned on a right side of the aircraft, and to identify that the ULD 402a next is to be positioned in the forward bay portion relative to the loading area.

With regard to FIGS. 5C, 5D, and 5E, responsive to the commands from the operator via the HMI controller 300 and responsive to the loading platform moving the ULD 402a next into the aircraft, swarm PDUs 504, 506, 508 are configured to detect the presence of the ULD 402a next. With temporary reference to FIG. 2, each of the swarm PDUs 504, 506, 508 may include the ULD sensor 219 to detect the presence of the ULD 402a next. In various embodiments, the ULD sensor 219 may include a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like. Returning to FIGS. 5C, 5D, and 5E, responsive to detecting the ULD 402a next, the swarm PDUs 510 operate to move the ULD 402a next onto the cargo deck 502.

Responsive the ULD 402a next moving further onto the cargo deck 502, swarm PDUs 510 are configured to notify the swarm PDUs 512 that the ULD 402a next is incoming and, upon detecting the presence of the ULD 402a next, are configured, along with swarm PDUs 510, to begin rotating the ULD 402a next. Responsive the ULD 402a next moving further onto the cargo deck 502 and being rotated, swarm PDUs 510 and 512 are configured to notify swarm PDUs 512 that the ULD 402a next is incoming and being rotated toward them and, upon detecting the presence of the ULD 402a next, are configured, along with swarm PDUs 510 to complete rotation of the ULD 402a next. It is noted that once a swarm PDU, such as swarm PDUs 512 and certain ones of swarm PDUs 510 no longer detect a presence of the ULD 402a next, swarm PDUs 512 and certain ones of swarm PDUs 510 may return to a standby mode. Once the ULD 402a next has been fully rotated to a left side forward bay portion relative to the loading area, swarm PDUs 514 may notify swarm PDUs 516 that the ULD 402a next is being translated to the right side of the aircraft. Once swarm PDUs 514 and 516 have translated the ULD 402a next to the right side of the aircraft, swarm PDUs 514 and 516 notify the right-side ones of swarm PDUs 504 that the ULD 402a next is to be translated to the forward right 1 and 2 positions, upon which swarm PDUs 514 and 516 and the right-side ones of swarm PDUs 504 translate the ULD 402a next to the forward right 1 and 2 positions. Again, it is noted that once a swarm PDU, such as PDUs 514 and 516 and the right-side ones of swarm PDUs 504 no longer detect a presence of the ULD 402a next, PDUs 514 and 516 and the right-side ones of swarm PDUs 504 may return to a standby mode. Further, it is noted that once the ULD 402a next reaches the forward right 1 and 2 positions, certain ones of the right-side ones of swarm PDUs 504 may enter a standby mode since they will not be needed again until an unloading process is performed.

In various embodiments, the HMI controller 300 may also provide a desired loading path, via path indicator 518, from the cargo loader/unloader 332 to end location while also illustrating a loading by the arrows within the path indicator 518. In various embodiments, the HMI controller 300 repeats the last step until all ULDs are loaded as per the cargo loading plan or responsive to the operator providing an indication to stop the loading operation via the status indicator 340.

In various embodiments, with further regard to FIG. 5E, initially, a ULD 402b next is currently on a loading platform waiting to be loaded onto a cargo deck 502 of the aircraft and the operator, via the HMI controller 300 and the loading plan, is providing input to cargo handling system 500 and to all of the swarm PDUs 504, 506, 508 to identify a direction that the ULD 402b next is to be moved, i.e. to identify that the ULD 402b next is to be rotated, to identify that the ULD 402b next is to be positioned on a left side of the aircraft, and to identify that the ULD 402b next is to be positioned in the forward bay portion relative to the loading area.

With regard to FIGS. 5E and 5F, responsive to detecting the ULD 402b next, the swarm PDUs 510 operate to move the ULD 402b next onto the cargo deck 502. Responsive the ULD 402b next moving further onto the cargo deck 502, swarm PDUs 510 are configured to notify the swarm PDUs 512 that the ULD 402b next is incoming and, upon detecting the presence of the ULD 402b next, are configured, along with swarm PDUs 510, to begin rotating the ULD 402b next. Responsive the ULD 402b next moving further onto the cargo deck 502 and being rotated, swarm PDUs 510 and 512 are configured to notify swarm PDUs 512 that the ULD 402b next is incoming and being rotated toward them and, upon detecting the presence of the ULD 402b next, are configured, along with swarm PDUs 510 to complete rotation of the ULD 402b next. It is noted that once a swarm PDU, such as swarm PDUs 512 and certain ones of swarm PDUs 510 no longer detect a presence of the ULD 402b next, swarm PDUs 512 and certain ones of swarm PDUs 510 may return to a standby mode. Once the ULD 402b next has been fully rotated to a left side forward bay portion relative to the loading area, swarm PDUs 514 may notify the left-side ones of swarm PDUs 504 that the ULD 402b next is to be translated to the forward left 1 and 2 positions, upon which swarm PDUs 514 and the left-side ones of swarm PDUs 504 translate the ULD 402b next to the forward left 1 and 2 positions. Again, it is noted that once a swarm PDU, such as PDUs 514 and the left-side ones of swarm PDUs 504 no longer detect a presence of the ULD 402b next, PDUs 514 and the left-side ones of swarm PDUs 504 may return to a standby mode. Further, it is noted that once the ULD 402b next reaches the forward left 1 and 2 positions, certain ones of the left-side ones of swarm PDUs 504 may enter a standby mode since they will not be needed again until an unloading process is performed.

In various embodiments, the HMI controller 300 may also provide a desired loading path, via path indicator 520, from the cargo loader/unloader 332 to end location while also illustrating a loading by the arrows within the path indicator 520. In various embodiments, the HMI controller 300 repeats the last step until all ULDs are loaded as per the cargo loading plan or responsive to the operator providing an indication to stop the loading operation via the status indicator 340.

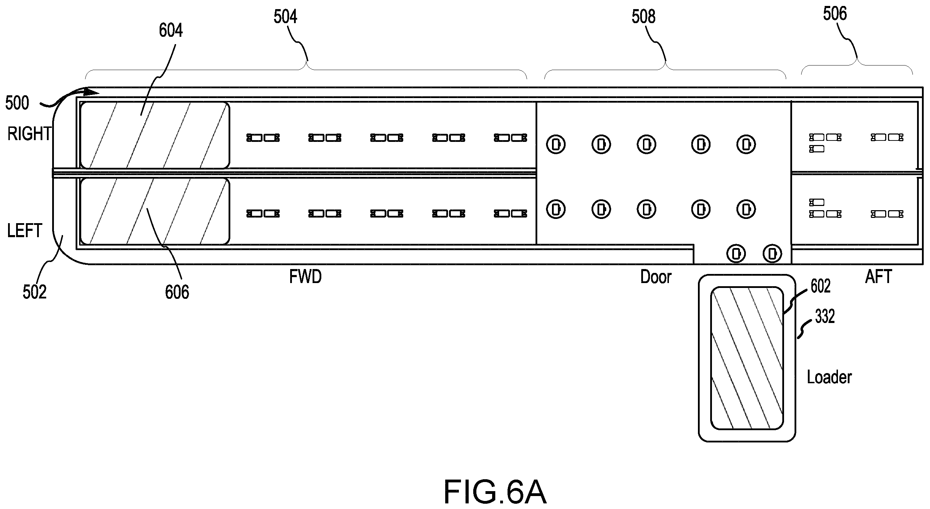

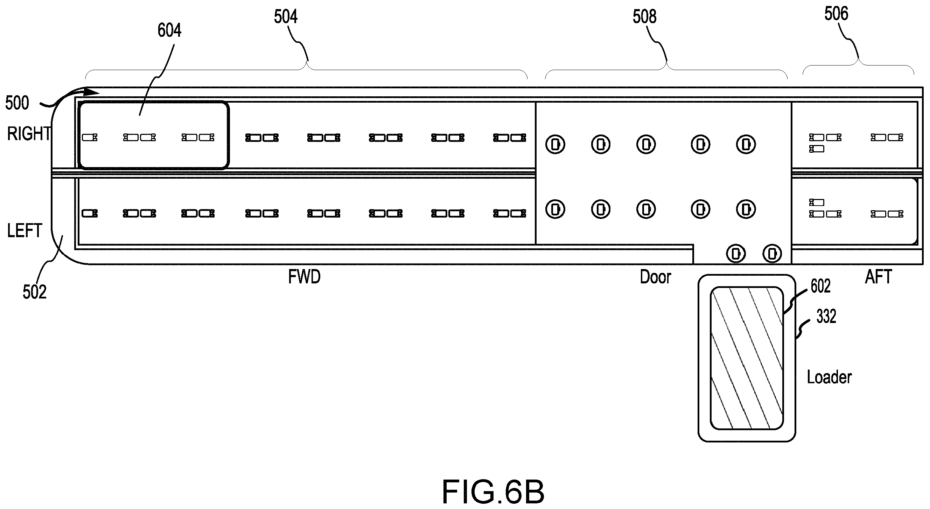

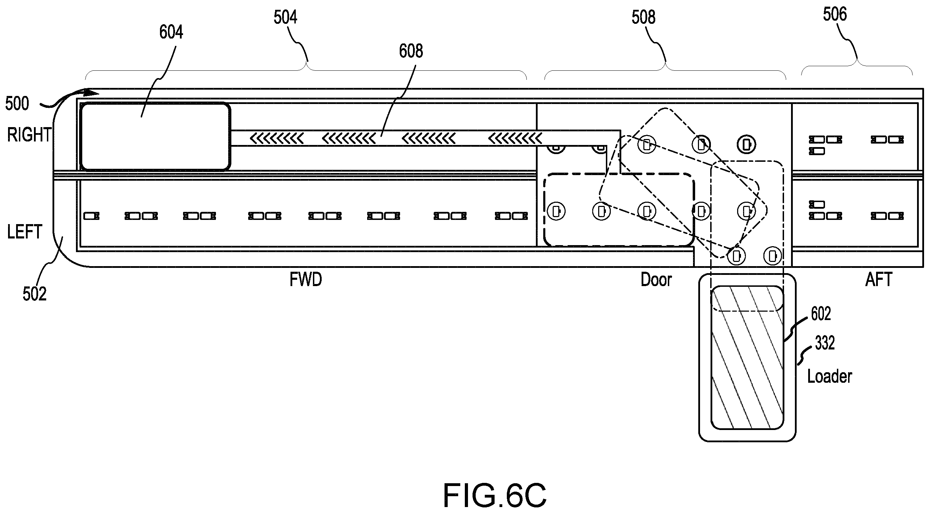

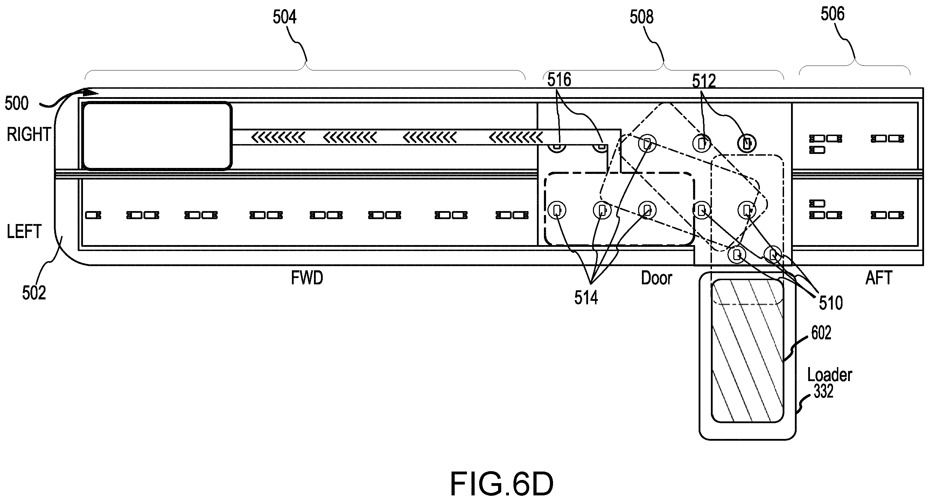

Referring to FIGS. 6A, 6B, 6C, and 6D, a loading ULDs within a cargo compartment 328 in a semi-autonomous mode via a human machine interface (HMI) controller 300 and a swarm-based power drive system is illustrated, in accordance with various embodiments. Referring also to FIG. 3A, in various embodiments, when the HMI controller 300 is in a semi-autonomous mode, the HMI controller 300 and the swarm PDUs 504, 506, and 508, via their respective sensors, present locations of all perceived ULDs on the cargo deck 502 and on the cargo loader/unloader 332 to the operator via the touch screen display 312. In FIG. 6A, the only perceived ULD is ULD 602 on the cargo loader/unloader 332. In various embodiments, the operator selects the ULD, such as ULD 602, to move via the touch screen display 312. In various embodiments, the HMI controller 300 presents, via the touch screen display 312, several possible end locations, such as end location 604 and 606. In various embodiments, the operator selects, via the touch screen display 312, a desired end location 604 from the presented several possible end locations, as is illustrated in FIG. 6B. In various embodiments, with larger cargo handling systems such as those found in wide body aircrafts, the possible number of end locations for ULD 602 may be significant in number. Therefore, the HMI controller 300 provides an adjustment that allows the operator to display a predetermined number of end locations as per a loading plan rather than all end locations.

In various embodiments, the HMI controller 300 presents a path indicator 608 the ULD 602 will travel from the cargo loader/unloader 332 to the selected end location 604 via the touch screen display 312 while also illustrating a loading by rotation and arrows within the path indicator 608, as is illustrated in FIG. 6C. Responsive to the operator selecting start via the status indicator 340 via the HMI controller 300, as is illustrated in FIG. 6D, the swarm PDUs 510 operate to move the ULD 602 onto the cargo deck 502. Responsive the ULD 602 moving further onto the cargo deck 502, swarm PDUs 510 are configured to notify the swarm PDUs 512 that the ULD 602 is incoming and, upon detecting the presence of the ULD 602, are configured, along with swarm PDUs 510, to begin rotating the ULD 602. Responsive the ULD 602 moving further onto the cargo deck 502 and being rotated, swarm PDUs 510 and 512 are configured to notify swarm PDUs 512 that the ULD 602 is incoming and being rotated toward them and, upon detecting the presence of the ULD 602, are configured, along with swarm PDUs 510 to complete rotation of the ULD 602. It is noted that once a swarm PDU, such as swarm PDUs 512 and certain ones of swarm PDUs 510 no longer detect a presence of the ULD 602, swarm PDUs 512 and certain ones of swarm PDUs 510 may return to a standby mode.

Once the ULD 602 has been fully rotated to a left side forward bay portion relative to the loading area, swarm PDUs 514 may notify swarm PDUs 516 that the ULD 602 is being translated to the right side of the aircraft. Once swarm PDUs 514 and 516 have translated the ULD 602 to the right side of the aircraft, swarm PDUs 514 and 516 notify the right-side ones of swarm PDUs 504 that the ULD 602 is to be translated to the forward right 1 and 2 positions, upon which swarm PDUs 514 and 516 and the right-side ones of swarm PDUs 504 translate the ULD 602 to the forward right 1 and 2 positions. Again, it is noted that once a swarm PDU, such as PDUs 514 and 516 and the right-side ones of swarm PDUs 504 no longer detect a presence of the ULD 602, PDUs 514 and 516 and the right-side ones of swarm PDUs 504 may return to a standby mode. Further, it is noted that once the ULD 602 reaches the forward right 1 and 2 positions, certain ones of the right-side ones of swarm PDUs 504 may enter a standby mode since they will not be needed again until an unloading process is performed.

In various embodiments, the HMI controller 300 may also provide a desired loading path, via path indicator 518, from the cargo loader/unloader 332 to end location while also illustrating a loading by the arrows within the path indicator 518. In various embodiments, the HMI controller 300 repeats the last step until all ULDs are loaded as per the cargo loading plan or responsive to the operator providing an indication to stop the loading operation via the status indicator 340.

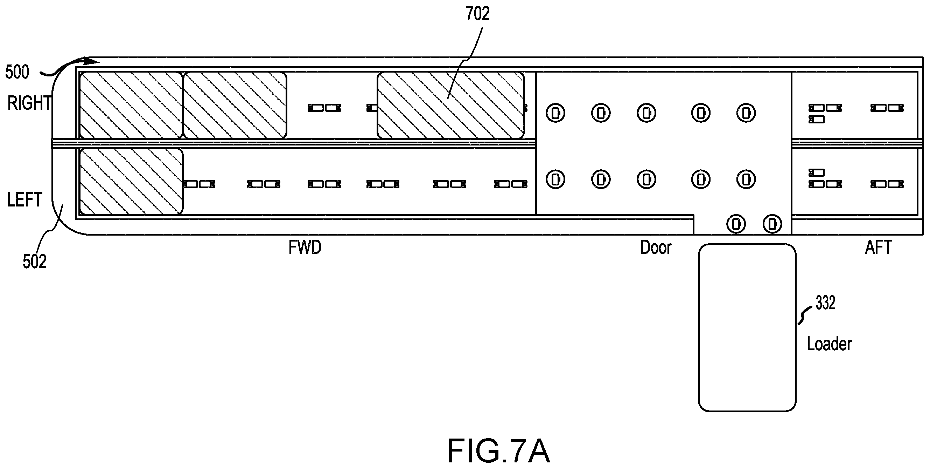

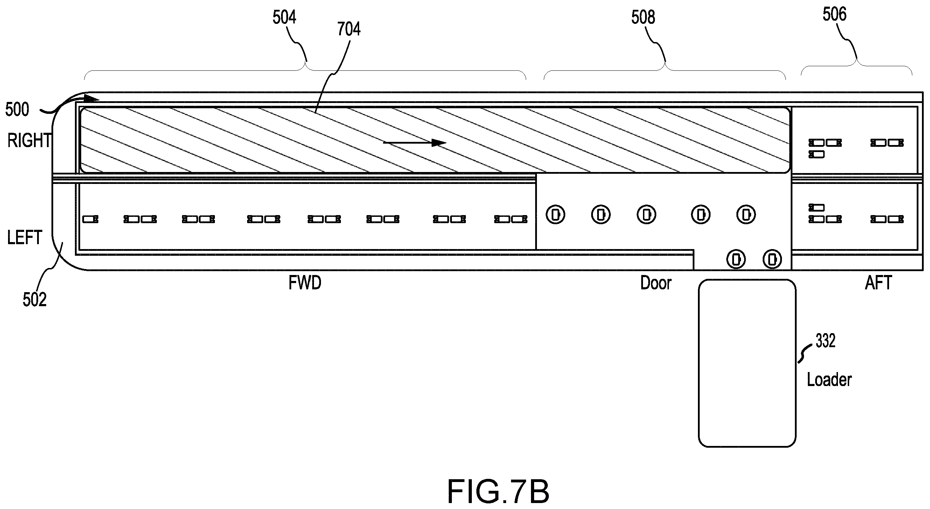

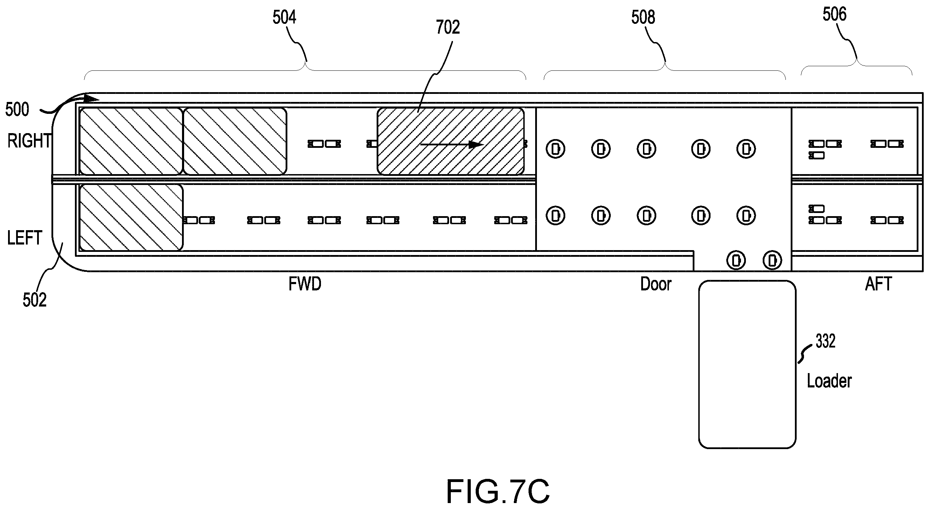

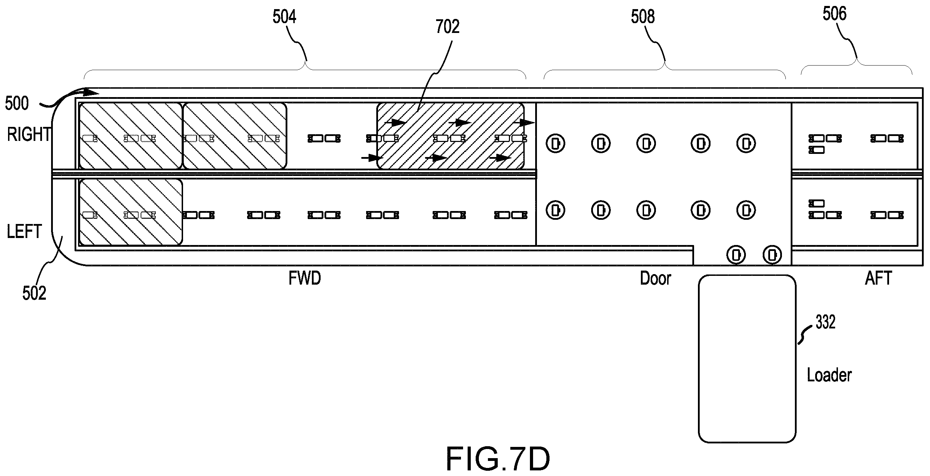

Referring to FIGS. 7A, 7B, 7C, and 7D, unloading ULDs within a cargo compartment 328 in a zone mode via a human machine interface (HMI) controller 300 and a swarm-based power drive system is illustrated, in accordance with various embodiments. Referring also to FIG. 3A, in various embodiments, when the HMI controller 300 is in a zone mode, the HMI controller 300 presents locations of all perceived ULDs on the cargo deck 502 and on the cargo loader/unloader 332 to the operator via the touch screen display 312, as is illustrated in FIG. 7A. In various embodiments, the operator selects a ULD, such as ULD 702, to move via the status indicator 340 on the touch screen display 312 or via one or more of select button 318, menu button 324, and control button 326. In that regard, in various embodiments, the operator may select, via the status indicator 340 on the touch screen display 312 or via one or more of select button 318, menu button 324, and control button 326, the ULD 702 by selecting from the displayed menus one or more of a side select, i.e. right, left, and a bay select, i.e. forward (FWD) or aft (AFT). In various embodiments, the HMI controller 300 may highlight the selected ULD 702. By selecting ULD 702, the HMI controller 300 identifies the right-side zone 704 as is illustrated in FIG. 7B, thereby notifying at least the right-side ones of swarm PDUs 504 and 508 that the ULD 702 is to be translated. In various embodiments, the operator may then select, via the status indicator 340 on the touch screen display 312 or via one or more of select button 318, menu button 324, and control button 326, any special operation to be performed, i.e. lateral move or rotate, such as move ULD 702 aft as is illustrated in FIG. 7C. In various embodiments, the operator may also provide any proportional commands using the joystick 316. In that regard, once the operator has selected the ULD 702 and the operation to be performed, the operator may use the joystick 316 to move the ULD 702 to the cargo loader/unloader 332. In various embodiments, the HMI controller 300 may show movement of the ULD 702 as it is unloaded as well as the direction of movement, as is illustrated in FIG. 7D. In various embodiments, in the zone mode, the swarm PDUs 504 and 508 may operate to notify another swarm PDU in the path of movement of the ULD 702 that the ULD 702 is headed in the PDUs direction and to be prepared. It is noted that once a swarm PDU, such as right-side ones of swarm PDUs 504 and 508, no longer detects a presence of the ULD 702, the right-side ones of swarm PDUs 504 and 508 may return to a standby mode.

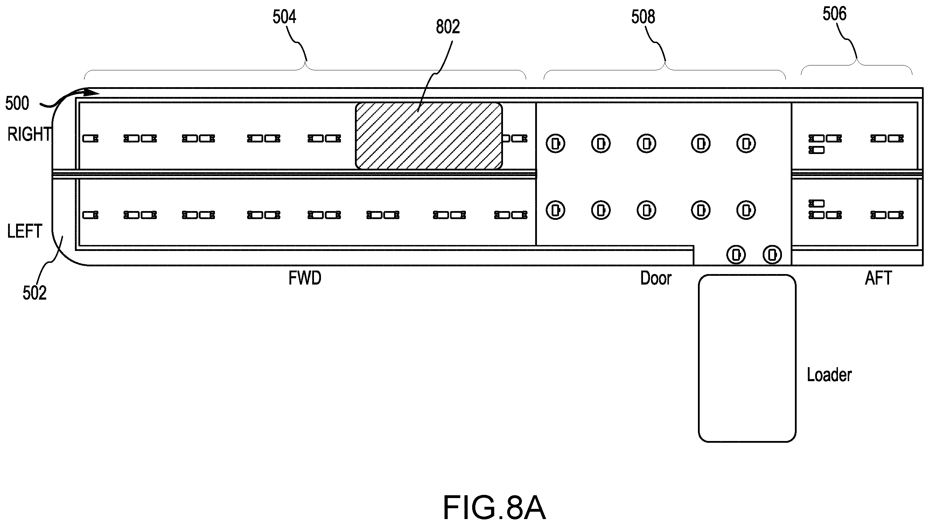

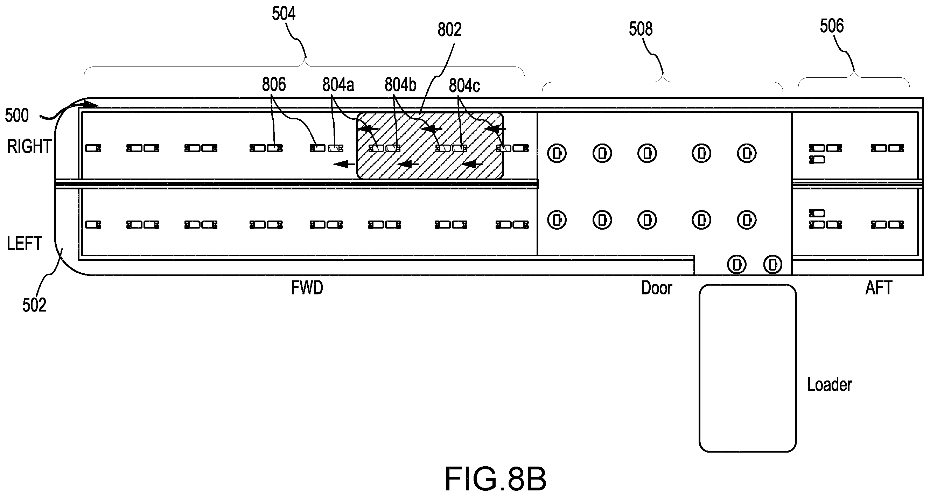

Referring to FIGS. 8A and 8B, moving a ULD within a cargo compartment 328 in a discrete mode via a human machine interface (HMI) controller 300 and a swarm-based power drive system is illustrated, in accordance with various embodiments. Referring also to FIG. 3A, in the discrete mode, when the HMI controller 300 is in the discrete mode, the operator has control over individually selected power drive units (PDUs), i.e. the swarm PDUs 504, 506, and 508, in the floor, which may be helpful in moving a ULD into a certain position. In that regard, when in the discrete mode, the operator may select individual PDUs and provide discrete commands to the selected PDUs in an attempt to move a ULD in a particular way. This operation may be performed with a combination of selections made by the touch screen display 312, physical buttons, such as select button 318, menu button 324, and control button 326, and/or the joystick 316 provided by the HMI controller 300. Accordingly, in various embodiments, when the HMI controller 300 is in a discrete mode, the HMI controller 300 presents to the operator, via the touch screen display 312, locations of all perceived ULDs. In various embodiments, responsive to selection of a particular ULD, such as ULD 802, the HMI controller 300 presents to the operator, via the touch screen display 312, one or more PDUs associated with the ULD 802. In various embodiments, responsive to the operator's selection one or more PDUs to control, the HMI controller 300 highlights and activates the chosen PDUs, such as PDUs 804a, 804b, and 804c. In that regard, the HMI controller 300 may provide an indication via the status indicator 340 on the touch screen display 312 informing the operation to use the joystick 316 for linear drive. In various embodiments, the operator provides proportional commands using the joystick 316. In that regard, once the operator has selected the ULD 802 and the PDUs 804a, 804b, and 804c, the operator may use the joystick 316 to move the ULD 802 using the PDUs 804a, 804b, and 804c. In various embodiments, the HMI controller 300 may show movement of the ULD 802 as it is translated as well as the direction of movement as is illustrated in FIG. 8B. In various embodiments, in the discrete mode, the selected swarm PDUs 804a, 804b, and 804c may operate to notify other swarm PDUs 806 in the path of movement of the ULD 802 that the ULD 802 is headed in the PDUs direction and to be prepared. It is noted that once a swarm PDU, such PDUs 804c, no longer detects a presence of the ULD 802, the PDUs 804c may return to a standby mode.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A human-machine interface, HMI, controller for a cargo handling system, comprising:
a touch screen display (312);
at least one processor (346); and
a memory operatively coupled to the at least one processor, the memory comprising instructions stored thereon that, when executed by the at least one processor, cause the at least one processor to:
present multiple cargo operating modes to an operator via the touch screen display (312);
responsive to receiving a selection of a cargo operating mode from the multiple cargo operating modes, present a set of operations associated with the cargo operating mode to the operator; and
responsive to receiving a selection of at least one operation from the set of operations associated with the cargo operating mode, send at least one command to at least one power drive unit, PDU, (110) of a plurality of power drive units, PDUs, wherein the plurality of PDUs operate in a decentralized control architecture, with each PDU of the plurality of PDUs autonomously making decisions based on a current commanded objective of the at least one command and directly communicating with at least one other PDU of the plurality of PDUs and wherein each PDU in the plurality of PDUs comprises:
a drive roller (208);
a motor (242) configured to rotate the drive roller; and
a PDU controller (240), the PDU controller is configured to directly communicate with the at least one other PDU of the plurality of PDUs to drive cargo as per the at least one command.

2. The HMI controller of claim 1, wherein the multiple cargo operating modes comprise an autonomous mode, a semi-autonomous mode, a zone mode, and a discrete mode.

3. The HMI controller of claim 2, wherein in the autonomous mode, the instructions, when executed by the at least one processor, further cause the at least one processor to:
load a loading plan for loading a unit load device, ULD, (20) into a cargo compartment (14); and
responsive to receiving an initiate command from the operator, set high-level objectives for the PDUs to autonomously load the ULD into the cargo compartment according to the loading plan.

4. The HMI controller of claim 3, wherein in loading the ULD into the cargo compartment, the instructions, when executed by the at least one processor, further cause the at least one processor to:
display, via the touch screen display (312), the ULD to be loaded;
display, via the touch screen display, an end location in the cargo compartment for the ULD; and
display, via the touch screen display, a path the ULD will move within the cargo compartment.

5. The HMI controller of claim 2, 3 or 4, wherein in the semi-autonomous mode, the instructions, when executed by the at least one processor, further cause the at least one processor to:
receive a selection of a unit load device, ULD, to move within a cargo compartment;
receive a selection of a destination location for the ULD; and
responsive to receiving an initiate command from the operator, set high-level objectives for the PDUs to autonomously move the ULD to the destination location.

6. The HMI controller of claim 2, 3, 4 or 5, wherein in the zone mode, the instructions, when executed by the at least one processor, further cause the at least one processor to:
receive a selection of a unit load device, ULD, to move within a cargo compartment;
receive the selection of at least one operation to be performed in moving the ULD within the cargo compartment; and
responsive to receiving a command from the operator via a joystick, set high-level objectives for the PDUs to autonomously move the ULD according to the command received via the joystick.

7. The HMI controller of any of claims 2 to 6, wherein in the discrete mode, the instructions, when executed by the at least one processor, further cause the at least one processor to:
display, via the touch screen display, one or more PDUs associated with a unit load device, ULD, to move within a cargo compartment;
receive a selection of an at least one PDU from the one or more PDUs; and
responsive to receiving a command from the operator via a joystick, operate the at least one PDU according to the command received via the joystick.

8. The HMI controller of any preceding claim, wherein, in order to drive the cargo as per the at least one command, the PDU controller is configured to send a command to engage the drive roller of the at least one of PDU or the at least one other PDU.

9. The HMI controller of any preceding claim, wherein, by each PDU of the plurality of PDUs communicating with the at least one other PDU of the plurality of PDUs, a mesh network of communication is formed by of the plurality of PDUs.

10. The HMI controller of any preceding claim, wherein each of the plurality of PDUs further comprises:
a presence sensor, wherein the PDU controller is further configured to send a command to engage the drive roller of the at least one PDU in response to receiving a signal from the presence sensor indicating a presence of the cargo.

11. A cargo handling system, comprising:
a plurality of power drive units, PDUs (110); and
a human-machine interface, HMI, controller (300) as claimed in any preceding claim, configured to control each of the plurality of PDUs.

12. An aircraft, comprising:
a cargo deck (12); and
a cargo handling system (100) disposed within the cargo deck, the cargo handling system comprising:
a plurality of power drive units, PDUs (110); and
a human-machine interface, HMI, controller (300) as claimed in any of claims 1 to 10, configured to control each of the plurality of PDUs.
